# EUROPEAN PATENT APPLICATION

(11) **EP 4 613 616 A1**
(43) Date of publication of application: **10.09.2025**
(21) Application number: 25161607.4
(22) Date of filing: 04.03.2025
(51) Int. Cl.: B62D 35/00, B60B 7/04, B60B 7/06, B60B 7/20, B62D 37/02

(54) **WHEEL FOR A MOTOR VEHICLE AND METHOD FOR MANUFACTURING A FAIRING FOR SAID WHEEL**

(30) Priority: 07.03.2024 IT 202400005128
(71) Applicant: FERRARI S.p.A., 41100 Modena (IT)
(72) Inventor: FAVARETTO, Fabrizio, 41100 Modena (IT)
(74) Representative: Studio Torta S.p.A.

(57) **Abstract**

A wheel (1) for a motor vehicle, comprising a member (5) capable of rotating around an axis (A); a tyre (7) angularly integral to said member (5) around the axis (A); a fairing (20) arranged so as to cover said tyre (7) and angularly fixed with respect to the axis (A); the fairing (20) comprises, in turn, a first half-fairing (21) and a second half-fairing (22) connected to one another in a releasable manner, arranged so as to face one another along the axis (A) and arranged so as to cover a first and a second portion (13, 14) of the tyre (7), respectively.

## Description

### CROSS-REFERENCE TO RELATED APPLICATIONS

This patent application claims priority from Italian patent application no. 102024000005128 filed on March 7, 2024, the entire disclosure of which is incorporated herein by reference.

### TECHNICAL FIELD

The invention relates to a wheel, in particular a wheel for a high-performance electric motor vehicle.

The invention also relates to a method for manufacturing a fairing for a wheel of a motor vehicle.

### BACKGROUND

Electric motor vehicles comprise, in a known manner:
- a front axle comprising a pair of front wheels;
- a rear axle comprising a pair of rear wheels; and
- a powertrain assembly comprising at least one electric machine operating as electric motor and operatively connected to the front and/or rear wheels so as to transmit a drive torque to the front and/or rear wheels.

Said motor vehicles further comprise one or more electric batteries designed to power the electric machine with the necessary quantity of electric power stored in the batteries.

The range of electric motor vehicles is determined by the quantity of electrical energy than can stored per volume unit.

In the state of the art, said value approximately is one tenth of the quantity of energy that can be stored per volume unit through the use of a fossil fuel.

This sets limits to the performances of electric motor vehicles, especially when they are used on tracks or for professional races.

Indeed, as it is known, when driving along a bend, motor vehicles counter centrifugal force through the friction of the tyres against the ground in a radial direction relative to the arc described by the bend.

As a consequence, for a given radius of the bend, the square of the maximum travel speed of a motor vehicle in conditions of grip is proportional to the vertical load acting upon the tyres.

In order to increase said load up to values exceeding the weight of the motor vehicle, motor vehicles are provided with downforce aerodynamic surfaces, namely shaped so as to generate an additional vertical downward thrust. Said vertical downward thrust, known as "downforce", is proportional to the square of the driving speed of the motor vehicle and to a downforce coefficient associated with the shape of the aerodynamic surface.

The increase in said downforce inevitably leads to an increase in the aerodynamic drag of the motor vehicle.

This is due to the fact that the downforce coefficient of the aerodynamic surface is proportional to the drag coefficient.

Because of this increase in aerodynamic drag, electric motors must deliver a greater electric power in order to maintain desired speed values on straight stretches of road.

Said electric power increase further jeopardizes the range of the motor vehicle.

Therefore, in order to increase the range of the motor vehicle, thus enabling an acceptable sports use, the aerodynamic drag of the motor vehicle should be reduced as much as possible, without jeopardizing the overall weight acting upon the wheels.

In other words, the overall drag coefficient of the motor vehicle should be reduced, though without affecting the downforce coefficient of the aerodynamic surfaces.

In the automotive industry, a wheel for a motor vehicle is needed, which reduces energy consumptions, though preserving a high aerodynamic load, so as to significantly increase the range of the motor vehicle, especially in racing mode.

More precisely, the automotive industry feels the need to reduce the aerodynamic drag of the wheels, preserving the possibility of easily removing the respective tyres already mounted and/or of mounting the respective tyres.

Furthermore, the automotive industry feels the need to reduce the aerodynamic drag of the wheels, without excessively increasing their weight and preserving their overall stiffness.

### SUMMARY

The object of the invention is to provide a wheel for a motor vehicle, which is capable of fulfilling at least one of the needs discussed above.

The aforesaid object is reached by the invention, as it relates to a wheel for a motor vehicle as defined in claim 1.

Furthermore, the invention relates to a method for manufacturing a fairing for a wheel of a motor vehicle as defined in claim 11.

### BRIEF DESCRIPTION OF THE DRAWINGS

The invention will be best understood upon perusal of the following detailed description of a preferred embodiment, which is provided by way of non-limiting example, with reference to the accompanying drawings, wherein:
- figure 1 is a perspective view, according to a first visual angle, of a wheel for a motor vehicle according to the invention;
- figure 2 is an exploded perspective view of the wheel of figure 1 according to the first visual angle;

- figure 3 is a perspective view, according to a different visual angle, of the wheel of figures 1 and 2;
- figure 4 is a cross section along line IV-IV of figure 3, with parts removed for greater clarity; and
- figure 5 is an exploded perspective view of the wheel of figures 1 to 4 according to said further visual angle.

### DESCRIPTION OF EMBODIMENTS

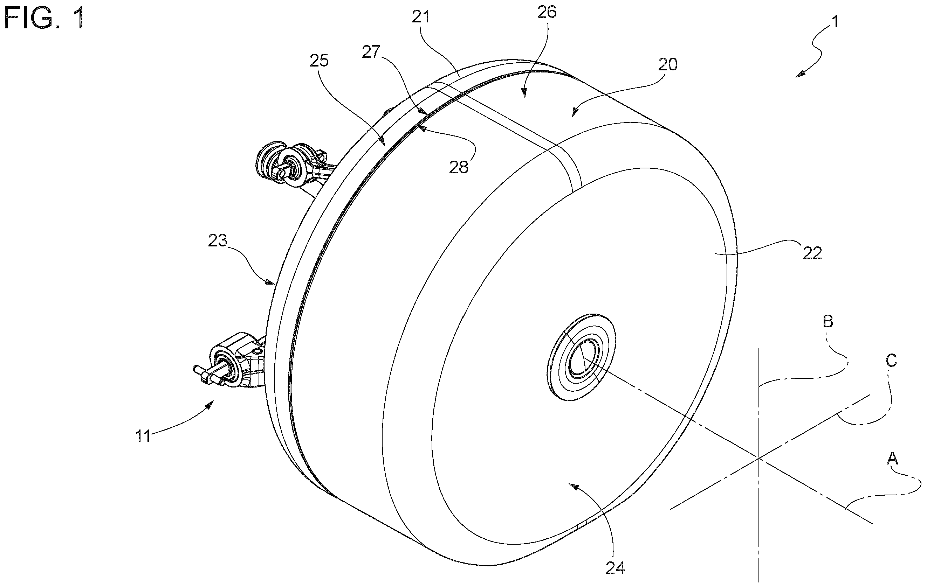

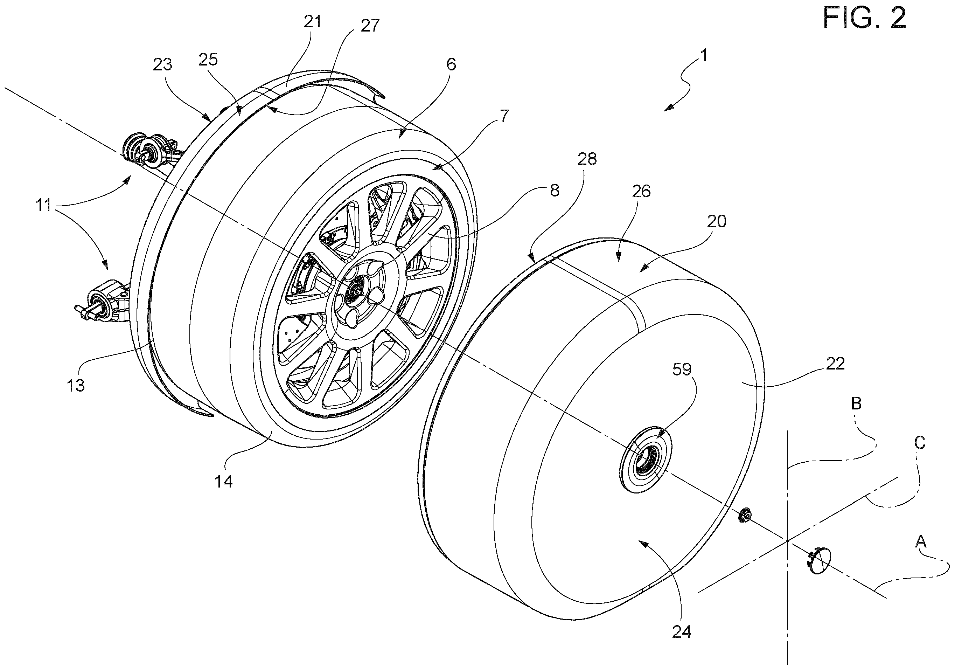

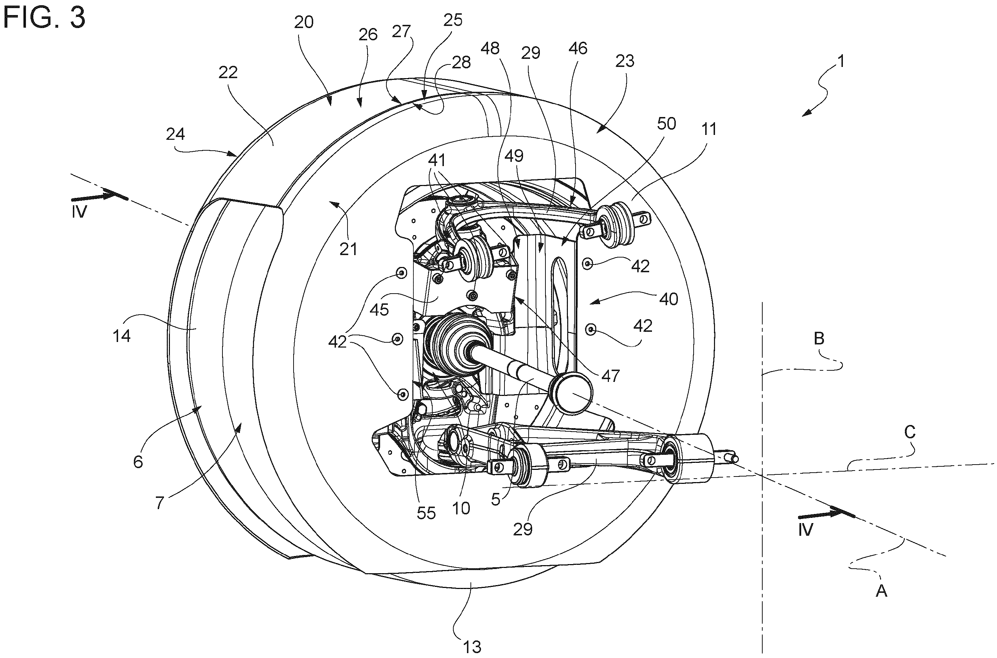

With reference to figures 1 to 5, number 1 indicates a wheel for a motor vehicle that is not shown herein.

The motor vehicle is a top-of-the-range motor vehicle designed both for a conventional urban/suburban use and for a racing track use.

Furthermore, the motor vehicle is provided with a hybrid or electric powertrain system and is equipped with electric batteries (not shown).

Hereinafter, expressions such as "at the top", "at the bottom", "at the front", "at the back" and others similar to them are used with reference to a normal travel condition of the motor vehicle.

The motor vehicle further comprises:
a body;
- a pair of front wheels 1 and a pair of rear wheels 1 mounted on the body in rotary manner; and
- a powertrain system.

In the specific case shown herein, the wheels 1 are drive wheels, namely they are directly connected to the powertrain system.

The body is spaced apart from the wheels 1 along a left-right direction with reference to the condition of normal travel direction and is offset from the wheels 1 along an up-down direction with reference to the normal travel condition of the motor vehicle.

In other words, the body does not define any wheelhouse and does not cover the wheels 1 parallel to the up-down direction.

Hereinafter, reference will be made to one single wheel 1 for the wheels 1 are substantially identical to one another.

The wheel 1 can rotate around an axis A parallel to the axis A and comprises, in turn:
- a rotary member, in particular an axle shaft 5, capable of rotating around the axis A;
- a tubular tyre 7 capable of rotating around the axis A and defining an annular tread 6; and
- a hub 8, which is interposed, radially to the axis A, between the axle shaft 5 and the tyre 7, is capable of rotating around the axis A in an integral manner together with the axle shaft 5 and causes the rotation of the tyre 7 around the axis A.

The axle shaft 5 also is operatively connected to the powertrain system, if necessary through the interposition of a known differential, so as to receive a torque with axis A.

In an embodiment, the axle shaft 5 is further connected to a steering system, which is not shown herein and can be operated to allow the wheel 1 to steer.

The wheel 1 further comprises:
- a hub carrier 10, which is fixed relative to the axis and is designed to support the hub 8 in a rotary manner around the axis A;
- a suspension 11, which is articulated on the hub carrier 10 on the body 2 in a manner that is not described in detail as it is not necessary for the purposes of the invention, so as to permit the relative movement of the wheel 1 with respect to the body determined by the roughness of the road surface; and
- a rolling bearing 12 interposed, radially to the axis A, between the hub carrier 10 and the axle shaft 5 and designed to permit the relative rotation of the axle shaft 5 with respect to the hub carrier 10 around the axis A.

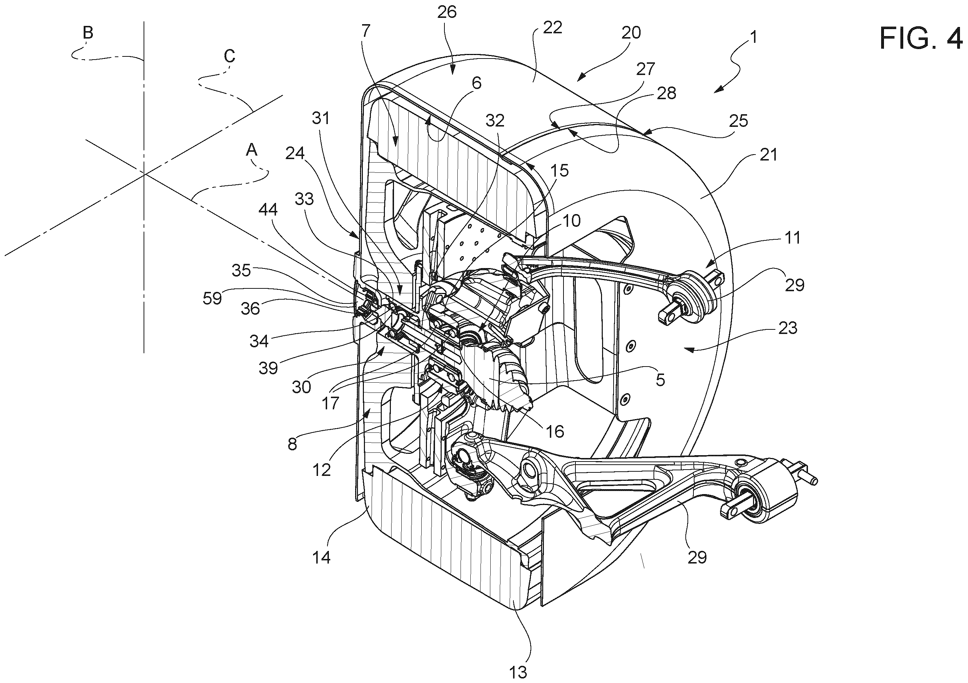

More in detail, the bearing 12 comprises, in turn (Figure 4):
- a radially outer ring 15, relative to the axis A, defined by the hub carrier 10;
- a radially inner ring 16, relative to the axis A, fixed to the axle shaft 5; and
- a plurality of rolling bodies 17, in the specific case shown herein, two crowns axially spaced apart from one another and each formed by a plurality of balls circumferentially equally spaced apart from one another, which are radially interposed between the rings 15, 16.

Advantageously, the wheel 1 comprises a fairing 20 arranged so as to cover the tyre 7 and fixed with respect to the axis A from a rotational point of view; the fairing 20 comprises, in turn, a pair of half-fairings 21, 22 connected to one another in a releasable manner, arranged so as to face one another along the axis A and arranged so as to cover respective portions 13, 14 of the tyre 7.

More in detail, the half-fairing 22 is arranged on the side opposite the body along the axis A and the half-fairing 21 is arranged on the side of the body and is interposed between the half-fairing 22 and the body itself.

The half-fairings 21 are shaped like a cylinder cut at the bottom with a plane parallel to the axis A and, in use, arranged horizontally.

The half-fairing 21 comprises, in particular:
- a substantially flat wall 23, having a development orthogonal to the axis A and facing the portion 13 along the axis A; and
- a head surface 25 projecting from the wall 23 towards the half-fairing 22 and surrounding the portion 13 radially to the axis A.

The half-fairing 22 comprises, in turn:
- a substantially flat wall 24, having a development orthogonal to the axis A and facing the portion 14 along the axis A; and
- a head surface 26 projecting from the wall 23 towards the head surface 25 of the half-fairing 21 and surrounding the portion 14 radially to the axis A.

The walls 23, 24 face one another and are spaced apart along the axis A.

The head surfaces 25, 26 have respective end edges 27, 28 coupled to one another so as to connect the half-fairings 21, 22 to one another.

With reference to figure 4, the wheel 1 further comprises a rolling bearing 30 designed to support the half-fairing 21 so that it is fixed and does not rotate relative to the axle shaft 5 around the axis A.

More in detail, the wheel 1 comprises:
- a collar 31 with a segment 32 keyed to the axle shaft 5 and a segment 33 radially spaced from the axle shaft 5; and
- a sleeve 34 rotationally fixed with respect to the axis A, extending along the axis A and axially spaced apart along the axis A.

The wall 23 of the half-fairing 21 comprises an expansion 35 coaxial to the axis A and axially closed by a cap 59 radially projecting from the wall 24.

The expansion 35 is locked on an abutment 36 of the sleeve 34 by means of a locking nut 44.

The bearing 30 comprises, in turn:
- a radially outer ring, relative to the axis A, defined by the segment 33 of the collar 31 and, therefore, capable of rotating in a integral manner together with the axle shaft 5 around the axis A;
- a radially inner ring, relative to the axis A, defined by the sleeve 34 and, therefore, integral to the expansion 35 of the half-fairing 21 and, hence, rotationally fixed around the axis A; and
- a plurality of rolling bodies 39, in the specific case shown herein, a crown of balls circumferentially equally spaced apart from one another, which are radially interposed between the radially outer and inner rings.

The wall 24 comprises a through opening 55 crossed by the axle shaft 5 and by a plurality of levers 29 forming the suspension 11.

In the specific case shown herein, the opening 55 is polygonal and symmetrical along an axis B, which is orthogonal to the axis A and, in use, is vertical.

In particular, the opening 55 has a height parallel to the axis B that is greater than the width parallel to an axis C orthogonal to the axes A, B.

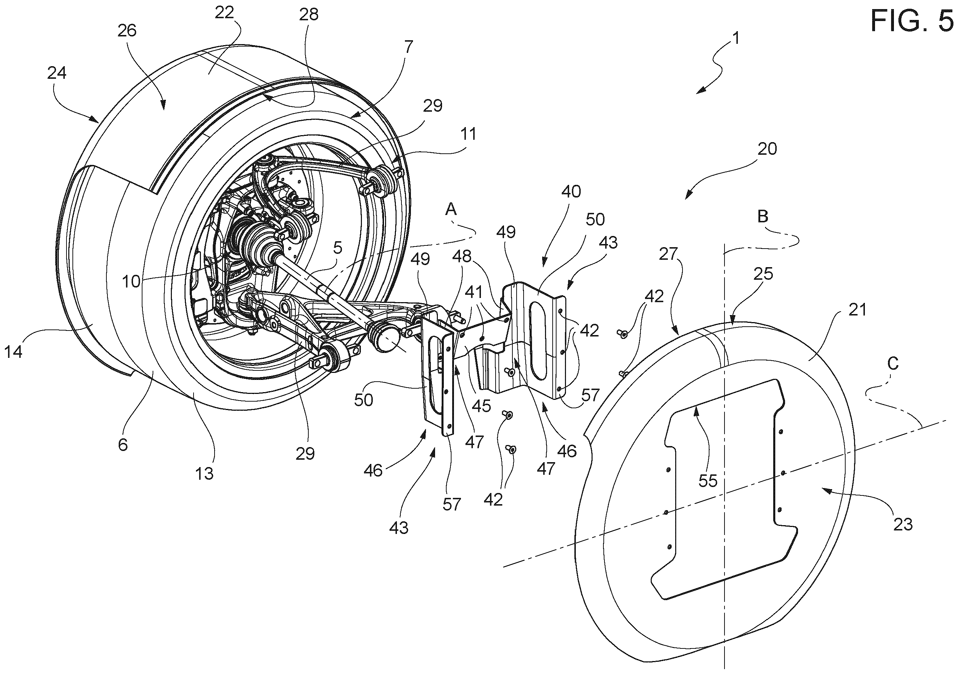

With reference to Figure 5, the wheel 1 further comprises a bracket 40 connected to the hub carrier 10 and to the half-fairing 22, so as to hold the half-fairing 22 in a rotationally fixed position with respect to the axis A.

More in detail, the bracket 40 is connected to the hub carrier 10 by means of a plurality of threaded connection elements 41 and to the half-fairing 22 by means of a plurality of threaded connection elements 42.

In the specific case shown herein, the bracket 40 comprises:
- a cross member 45 having a main development parallel to the axis C and crossed by the elements 41; and
- a pair of side walls 46 protruding from respective opposite end edges 47 of the cross member 45.

In particular, each wall 46 comprises, in turn, in sequence, starting from the respective end edge 47:
a segment 48 extending towards the half-fairing 21;
a segment 49, which extends at a substantially constant distance from the half-fairing 21; and
a segment 50, which extends towards the half-fairing 22.

The segments 48, 49, 50 extend both above and under the cross member 45.

Each wall 46 further comprises an end flap 57 defined by the segment 50 and crossed by the elements 42.

The elements 42 define respective columns 43, each extending parallel to the axis B and going through a respective flap 57 and the half-fairing 21 on a respective side of the opening 55.

Once the bracket 40 is connected to the half-fairing 21 and to the hub carrier 10, the cross member 45 and the segments 48, 49, 50 of each wall 46 are arranged in the area of the opening 55, when the half-fairing 21 is observed parallel to the axis A.

In an embodiment which is not shown herein, the fairing element 20 could be shaped so as to define a downforce airfoil capable of exerting a downward aerodynamic force directly upon the wheel 1.

In use, the fairing 20 is arranged so as to cover the tyre 7, which is not covered by the body of the motor vehicle 1.

Therefore, the fairing 20 reduces the aerodynamic drag of the wheel 1 and, hence, of the motor vehicle.

The fairing 20 is mounted by connecting the bracket 40 to the hub carrier 10 by means of the elements 41 and the bracket 40 to the half-fairing 21 by means of the elements 42. At this point, the half-fairing 21 is supported by the hub carrier 10 so as to be rotationally fixed relative to the axis A.

The half-fairing 22 is mounted in a rotationally fixed position with respect to the axis A, locking the expansion 35 on the abutment 36 of the sleeve 34 by means of a locking nut 44.

The half-fairings 21, 22 are coupled to one another by connecting the end edges 27, 28 to one another.

The disclosure above reveals evident advantages that can be obtained with the invention.

In particular, the fairing 20 reduces the aerodynamic drag of the wheel 1.

By so doing, the overall drag coefficient of the motor vehicle 1 can be reduced, though without affecting the downforce coefficient of the motor vehicle 1.

Therefore, consumptions are reduced and, hence, the range of the motor vehicle 1 increases, preserving at the same time the ability of the motor vehicle 1 to travel along curved trajectories at high speeds.

In short, the motor vehicle 1 ensures particularly high performances and can be used for races.

The fairing 20 is consists of two half-fairings 21, 22 coupled in the area of respective end edges 27, 28 carried by corresponding head surfaces 25, 26.

In this way, the half-fairings 21, 22 can easily be separated from one another, thus making the tyre 10 accessible.

The half-fairing 22 is fixed to the hub carrier 10, which is fixed to the suspension 11. In this way, the fairing 20 follows the movements of the suspension 10.

The half-fairing 21 is fixed to the sleeve 34 coaxial to the axis A but rotationally fixed with respect to the axis A. This allows the half-fairing 21 to be designed without projecting parts, thus reducing its overall weight with the same flexural stiffness.

Finally, the wheel 1 and the method for manufacturing the fairing 20 for the wheel 1 of a motor vehicle can clearly be subjected to changes and variations, which, though, do not go beyond the scope of protection set forth in the appended claims.

In particular, the wheel 1 could be a non-drive wheel. In this case, the axle shaft 5 would be replaced by an idle shaft supported by the body.

## Claims

1. A wheel (1) for a motor vehicle, comprising:
- a rotary member (5) capable of rotating around an axis (A); and
- a tyre (7) angularly integral to said member (5) around said axis (A);
**characterized in that** it comprises a fairing (20) arranged so as to cover said tyre (7) and angularly fixed relative to said axis (A);
said fairing (20) comprising, in turn, a first half-fairing (21) and a second half-fairing (22) connected to one another in a releasable manner, arranged so as to face one another along said axis (A) and arranged so as to cover a first and a second portion (13, 14) of said tyre (7), respectively.

2. The wheel according to claim 1, **characterized in that** said first half-fairing (21) and said second half-fairing (22) have a first and a second end edge (27, 28), respectively, coupled to one another.

3. The wheel according to claim 1 or 2, **characterized in that** it comprises a first bearing (30);
said first bearing (30) comprising, in turn:
- a first ring (33), in particular a radially outer ring, capable of rotating around said axis (A) integrally to said member (5);
- a second ring (34), in particular a radially inner ring, rotationally fixed relative to said axis (A) and integral to said second half-fairing (22); and
- a plurality of first rolling bodies (39) rolling, in use, on said first and second ring (33, 34).

4. The wheel according to claim 3, **characterized in that** it comprises a sleeve (34), which is rotationally fixed relative to said axis (A), is coaxial to said axis (A) and is at least partly axially spaced apart from said member (5);
said second half-fairing (22) being directly fixed to said sleeve (34).

5. The wheel according to any one of the preceding claims, **characterized in that** it comprises:
- a hub carrier (10) angularly fixed relative to said axis (A) and capable of being connected to a suspension (11) of said motor vehicle; and
- a hub (8) capable of rotating around said axis (A) relative to said hub carrier (10) and angularly integral to said tyre (7);
said first half-fairing (21) being directly or indirectly connected to said hub carrier (10).

6. The wheel according to claim 5, **characterized in that** it comprises a bracket (40) connected in a fixed manner to said first half-fairing (21) by means of first releasable connection means (42) and to said hub carrier (10) by means of second releasable connection means (41).

7. The wheel according to claim 6, **characterized in that** it comprises a second bearing (12) interposed between said hub carrier (10) and said rotary member (5) and designed to allow said member (5) to rotate around said axis (A) relative to said hub carrier (10).

8. The wheel according to any one of the preceding claims, **characterized in that** said first half-fairing (21) comprises a through opening (55) crossed by said rotary member (5) and by said suspension (11).

9. A motor vehicle comprising:
- at least one wheel (1) according to any one of the preceding claims; and
- a body, on which said wheel is supported by means of said suspension (11);
said first half-fairing (21) being interposed between said second half-fairing (22) and said body parallel to said axis (A).

10. The motor vehicle according to claim 9, **characterized in that** it comprises an electric or hybrid drive system.

11. A method for manufacturing a fairing (20) for a wheel (1) of a motor vehicle,
said wheel (1) comprising:
- a rotary member (5) capable of rotating around an axis (A);
- a tyre (7) angularly integral to said member (5) around said axis (A);
- a hub carrier (10) angularly fixed relative to said axis (A) and capable of being connected to a suspension (11) of said motor vehicle; and
- a hub (8) capable of rotating around said axis (A) relative to said hub carrier (10) and angularly integral to said tyre (7);
**characterized in that** it comprises the steps of:
i) interposing a first bearing (30) between said member (5) and a sleeve (34), which is rotationally fixed relative to said axis (A) and coaxial to said axis (A);
ii) connecting a first half-fairing (22) to said sleeve (34);
iii) directly or indirectly connecting a second half-fairing (21) to said hub carrier (10) in a position axially facing said first half-fairing (22); and
iv) coupling axial end edges (27, 28) of said first and second half-fairing (22, 21), which are opposite one another, to one another so as to form said fairing (20).

12. The method according to claim 11, **characterized in that** said step iii) comprises the steps of:
v) connecting a bracket (40) to said hub carrier (10) in a releasable manner; and
vi) connecting said first half-fairing (22) to said bracket (40) in a releasable manner.
